# EUROPEAN PATENT APPLICATION

(11) **EP 4 827 174 A1**
(43) Date of publication of application: **21.10.2026**
(21) Application number: 26179718.7
(22) Date of filing: 10.12.2022
(51) Int. Cl.: H04W 48/16, H04W 4/80, H04W 4/42, H04W 48/12, H04W 84/00

(54) **IN-FLIGHT CONNECTIVITY**

(30) Priority: 10.12.2021 US 202163288165 P
(62) Document number(s) of the earlier application(s) in accordance with Art. 76 EPC: 22856879.6 / 4 434 269
(71) Applicant: ViaSat, Inc., Carlsbad, CA 92009 (US)
(72) Inventor: PRENGER, Roger M., Carlsbad, 92009 (US); PANLILIO, Maria C., Carlsbad, 92009 (US); ABHYANKAR, Rahul S., Carlsbad, 92009 (US); O'NEAL, Stephen, Carlsbad, 92009 (US)
(74) Representative: Appleyard Lees IP LLP

(57) **Abstract**

Technology is described for wireless connectivity for a mobile device. The technology can include a method comprising detecting, at an agent on the mobile device, an on-board connection availability for an on-board public network associated with a service set identifier (SSID) from an access point on-board a vehicle. The method can comprise identifying, at the agent on the mobile device, an on-board service availability for the on-board public network. The method can further comprise enabling, at the mobile device, a notification regarding connecting to the on-board public network based in part on the on-board connection availability and the on-board service availability. The method can comprise enabling, at the mobile device, a connection to the on-board public network.

## Description

### RELATED APPLICATION

This application claims priority to U.S. Provisional Application No. 63/288,165 filed December 10, 2021, which is incorporated herein by reference.

### BACKGROUND

Passengers arriving at or departing from an airport, a train station, a bus station, a seaport, or other transport hub are often in a hurry and may suffer from information overload. Many passengers are responsible for coordinating other members of their party by receiving and providing tickets for them, ensuring that the party members have their luggage and other personal effects, and arriving in a timely manner at the correct locations. Amid these time sensitive matters, passengers rely on electronic devices, such as cell phones, tablets, laptops, and the like, to acquire relevant travel details for the passenger's travel.

Because of the vast amount of information that can be acquired from electronic devices and the timeliness of the updates that such electronic devices can receive (e.g., changes to the flight time, departing gate, arriving date, connecting flights, obtaining travel excursions for a destination, purchasing products, and the like), maintaining electronic device connectivity is useful for expediting a smoother travel experience. As individuals travel, they desire to maintain their connection to public data networks (e.g., the Internet) using wireless networks that may be privately or publicly available. Furthermore, individuals often desire to connect their mobile devices (e.g., mobile phones, tables, laptops, and other electronic devices) as frequently as possible to public data networks regardless of whether they are at a waiting point, walking through a terminal, walking through a hotel or in-transit in a vehicle such as an airplane, bus, boat, ride sharing, taxi or other vehicle. Therefore, methods, systems, and devices for easing the travel experience by providing a connection to public data networks continue to provide value to traveling individuals.

### SUMMARY

In one example embodiment, a method for wireless connectivity for a mobile device is provided. The method can include detecting, at an agent on the mobile device, an on-board connection availability for an on-board public network or other service associated with a service set identifier (SSID) from an access point (e.g., a wireless router or wireless gateway) on-board a vehicle. An on-board service availability for the on-board public network (e.g., a broadcast public network service availability) can be identified at the agent on the mobile device. A notification regarding connecting to the on-board public network can be enabled at the mobile device based in part on the on-board connection availability and the on-board service availability. Further, a connection to the on-board public network can be enabled at the mobile device.

In another example, a non-transitory machine-readable storage medium having instructions embodied thereon is provided. The instructions when executed by one or more processors, can cause the one or more processors to perform a process. The process can include detecting, at an agent on a mobile device, an on-board connection availability for an on-board public network associated with a service set identifier (SSID) from an access point on-board a vehicle. The process can also include identifying, at the agent on the mobile device, an on-board service availability for the on-board public network. The process can further include enabling, at the mobile device, a notification regarding connecting to the on-board public network based in part on the on-board connection availability and the on-board service availability. The process can include enabling, at the mobile device, a connection to the on-board public network.

In yet another example, a mobile device for seamless wireless connectivity can comprise at least one processor and at least one memory device including a data store to store a plurality of data and instructions. The plurality of data and instructions, when executed, can cause an agent of the mobile device to detect an on-board connection availability for an on-board public network associated with a service set identifier (SSID) from an access point on-board a vehicle. The plurality of data and instructions, when executed, can cause an agent of the mobile device to identify an on-board service availability for the on-board public network. The plurality of data and instructions, when executed, can cause an agent of the mobile device to enable a notification regarding connecting to the on-board public network based in part on the on-board connection availability and the on-board service availability. The plurality of data and instructions, when executed, can cause an agent of the mobile device to enable a connection to the on-board public network.

### BRIEF DESCRIPTION OF THE DRAWINGS

FIG. 1 is a flowchart illustrating a process for wireless connectivity on an aircraft according to an example of previously existing technology.
FIG. 2 is a flowchart illustrating a process for seamless wireless connectivity according to an example of the present technology.
FIG. 3 is a diagram illustrating a process for wireless connectivity on an aircraft according to an example of the present technology.
FIG. 4 is a block diagram illustrating a process for wireless connectivity for an aircraft with user input according to an example of the present technology.
FIG. 5 is a block diagram illustrating a system for providing seamless wireless connectivity for an aircraft according to an example of the present technology.
FIG. 6 is a flowchart illustrating an example method for wireless connectivity in proximity of a vehicle.
FIG. 7 is block diagram illustrating a satellite communication system according to an example of the present technology.
FIG. 8 is a block diagram that provides an example illustration of a computing device that can be employed in the present technology.

### DETAILED DESCRIPTION

Transitioning between wireless networks to maintain or while maintaining access to computer networks (e.g., such as the Internet) can be time-consuming and wearisome for a user desiring the wireless access as the user moves from one location to another (e.g., during travel for work, health care, pleasure, or other reasons). Even when the user has adequate information to manually transition between the wireless networks (e.g., service set identifiers (SSIDs), passwords, estimated coverage areas, data rates, cost, and the like), tracking the information for the numerous wireless networks with which the user may desire to connect can involve information that may be difficult to access or provide when moving quickly between locations. Additionally, performing the necessary steps to join the appropriate wireless network at a given moment may add further complications for the user.

These complications can be frustrating or annoying when the user is in transit. For example, an airline traveler wanting to successfully join Wi-Fi^{®} (Wi-Fi is a registered trademark) to access a service (e.g., a public network like the Internet) on an aircraft using a mobile device may need to, for example: (i) remember to join the aircraft Wi-Fi access point at the correct time and location, (ii) remember the numerous manual software operations (e.g., user interface commands) to be completed before being and to be connected to the aircraft Wi-Fi access point, (iii) remember or find the uniform resource locator (URL) associated with accessing a network connection assistant of the aircraft Wi-Fi access point, and (iv) know how to navigate the network connection assistant associated with the aircraft Wi-Fi access point to gain access to the public network via the Wi-Fi access point. The network connection assistant may be a mobile device feature that appears and enables users to login to or authenticate to the Wi-Fi access point or the network connection without the need to manually browse to and open a web browser.

Even when the user knows all of these operations and properly completes them, timing may be a concern. For example, the time point at which the user is notified about the ability to connect to an aircraft Wi-Fi access point may be another factor that affects the user's likelihood of successfully connecting to the aircraft Wi-Fi access point or accessing a service provided via the Wi-Fi access point. For example, there may be many time points when airline passengers may be alerted about aircraft Wi-Fi availability for their flight, including, but not limited to: 1) during the airline ticket booking process (which can occur days, weeks, months, or even years before the time of the flight); 2) shortly (e.g., the day) before the flight as a reminder via one or more of an email, text, alert, or notification, during the flight check-in process, or as information generally available about the upcoming flight; 3) at the airport terminal or gate as the passengers await boarding; 4) when the passengers have boarded and have been seated but before the aircraft door has been closed; and/or 5) once the aircraft is inflight (for example, once the aircraft flies above a threshold altitude, etc.), and so forth.

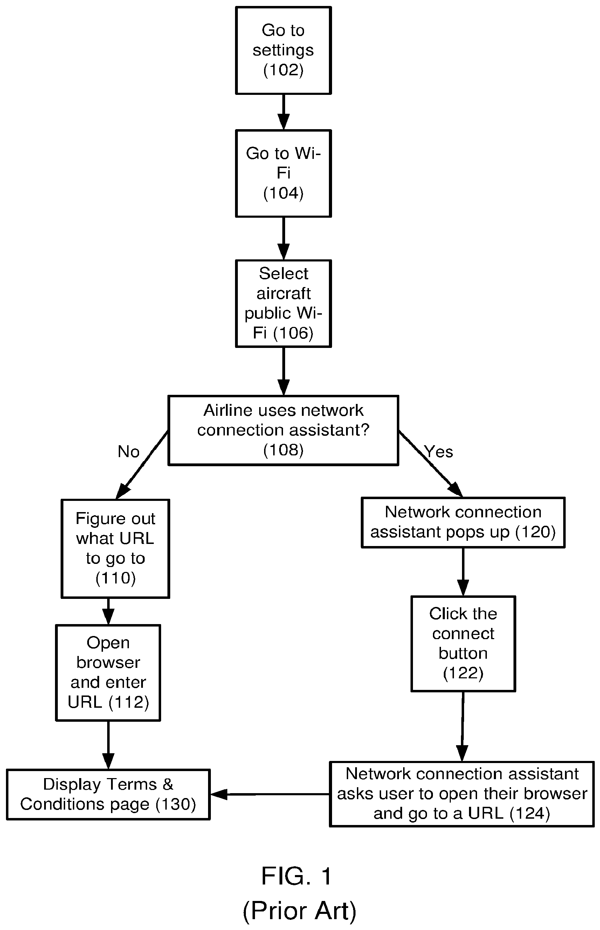

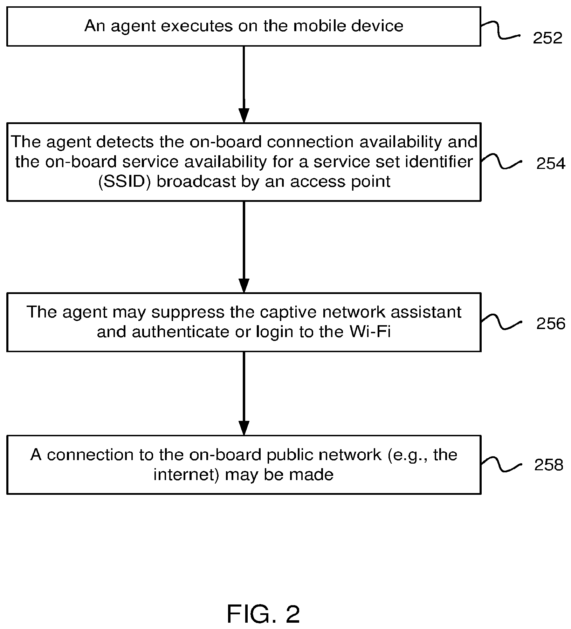

Because of the number of factors involved in the seemingly straightforward activity of connecting to the Wi-Fi access point and/or corresponding provided service of a vehicle by a user or passenger, systems and processes that can ease the transition between wireless networks can be useful. However, even such systems and processes may prove difficult for passengers to employ to connect to the Wi-Fi access point and/or service of the vehicle. The difficulty involved in connecting to the Wi-Fi access point of a vehicle and the service provided thereby can be illustrated with an example. FIG. 1 illustrates a previously existing example process for connecting to a Wi-Fi access point or gateway using a mobile device (e.g., cell phone, tablet, laptop, etc.). Later, a discussion of the present technology will be provided using FIG. 2 and subsequent figures.

As shown in FIG. 1, a flowchart depicting an example process for connecting to a vehicle's Wi-Fi access point using existing systems and processes includes some operations that can be initiated by users (i.e., blocks 102, 104, 106, 110, 112, and 122) and other operations that can be performed automatically by devices having executable instructions (i.e., blocks 108, 120, 124, and 130). Certain operations, such as those that can be performed automatically by devices (i.e., blocks 108, 120, 124, and 130) can be customized by an airline (or other passenger carrier operators such as a train operator, a cruise operator, a bus operator, and the like).

A description of these user initiated blocks 102, 104, 106, 108, 110, 112, 120, 122, 130 illustrates the user information requested and time consumption involved. When a user decides to join an aircraft's Wi-Fi access point, the user can determine the correct time that the aircraft's Wi-Fi access point is available (not explicitly shown as an operation) and can navigate to the "network settings" page of the mobile device, as depicted in block 102. After navigating to the "network settings" page of the mobile device, the user can navigate to the Wi-Fi menu of the mobile device, as depicted in block 104, and select to join the aircraft's public Wi-Fi access point, as depicted in block 106.

After the user completes these activities, for an airline that uses a network connection assistant for mobile device connections, as depicted in block 108, a network connection assistant may open up, as depicted in block 120. The network connection assistant may enable the user to access one or more services via the Wi-Fi access point by clicking a connect button that is displayed when using the network connection assistant, as depicted in block 122. The network connection assistant can display information requesting that the user open their browser using a specific URL or can automatically direct the browser of the mobile device to the specific URL, as depicted in block 124. The specific URL can be used to direct the user to a page used to connect to the one or more services provided via the Wi-Fi access point, such as a terms and conditions page. After this operation in block 124 has been completed, the page can be displayed, as depicted in block 130, and the user can accept the terms and conditions in order to access the one or more services via the aircraft's Wi-Fi access point.

For an airline that does not use a network connection assistant, the user may manually identify what URL to navigate to, as depicted in block 110, and subsequently open the browser of the mobile device and enter the URL to access the page used to connect to the one or more services, as depicted in block 112. After this operation has been completed, the terms and conditions page can be displayed, as depicted in block 130 and as discussed in the preceding network connection assistant scenario, and the aircraft's Wi-Fi access point can be used by the user to access the one or more services.

An aircraft's Wi-Fi access point can be discovered by a mobile device in different ways. To illustrate, mobile devices may continuously transmit probe requests to identify known and unknown Wi-Fi access points or gateways that can listen to the probe requests. Additionally, or alternatively, the mobile device can be configured to listen to incoming announcements (e.g., beacon frames) to determine a list of nearby known and unknown Wi-Fi access points or networks that the mobile device can join. Based on identification of a known (e.g., previously connected to by the mobile device) or unknown (not previously connected to by the mobile device) nearby Wi-Fi access point or network (via either the probe requests or announcements), the mobile device may provide the user with a notification regarding the nearby Wi-Fi access point and set up a connection between the Wi-Fi access point and the mobile device. However, enabling notifications (for example, resulting from either the probe requests or announcements) related to and/or connecting to one or more of the list of nearby Wi-Fi access points or networks may not be customizable or even available for a particular operating system. For example, iOS^{®} may not provide support for a user's device to automatically identify and connect to one or more Wi-Fi access points in a list of unknown but nearby Wi-Fi SSIDs, even if the user is otherwise authorized to connect to the unknown Wi-Fi SSID. Therefore, a user notification for when a Wi-Fi access point or gateway is available may not be configurable, and the user may not be notified when the mobile device is able to access such a nearby Wi-Fi access point or network. A mobile device, as described herein, may be any computing device that can be moved within range of a Wi-Fi access point, including but not limited to: a user device, a mobile phone, tablet, laptop, gaming devices, e-book readers, smart watches, AR (augmented reality) headsets, mobile personal computers (e.g., on a cart), etc.

Regardless of whether an airline uses a network connection assistant or not, the user information requested and time consumption involved in connecting to the aircraft's Wi-Fi access point according to the operations shown with reference to FIG. 1 can deter potential users from joining the aircraft's Wi-Fi access point. The systems and methods of the present technology provide improvements that reduce these constraints and enable seamless wireless connectivity between available wireless network connections (for example, enabling a mobile device to transition between a cellular network and an unknown Wi-Fi access point). Such seamless wireless connectivity technologies may increase the number of users that are likely to join an aircraft's Wi-Fi access point after transitioning from Wi-Fi at the airport, a cellular network, and so forth, when the users travel on the aircraft.

In one example embodiment, a method is provided for seamless wireless connectivity in connecting a mobile device to an unknown wireless access point. The method can comprise detecting, at an agent on the mobile device, an on-board connection availability associated with a service set identifier (SSID) for a Wi-Fi access point, a gateway, or a server on-board a vehicle. In another operation, an on-board service availability for an on-board public network can be identified at the agent on the mobile device. The method can include enabling the mobile device to provide a notification (e.g., to a user) regarding connecting to the on-board public network based in part on the on-board connection availability and the on-board service availability. Accordingly, a connection to the on-board public network can be enabled for the mobile device.

As used herein, "on-board connection availability" for a wireless access point refers to the broadcast of a signal or message regarding the availability of a wireless communication connection between a wireless access point (e.g., Wi-Fi gateway) and a mobile device attempting to connect to the wireless access point. Thus, the on-board connection availability may indicate an availability of a corresponding Wi-Fi access point. For example, the on-board connection availability for a Wi-Fi access point can be present or active when the Wi-Fi access point permits a mobile device to connect to the Wi-Fi access point. In contrast, the connection availability for the Wi-Fi access point can be absent when the Wi-Fi access point does not permit a mobile device to connect to the Wi-Fi access point. The connection availability for the Wi-Fi access point can be present or active even when the Wi-Fi access point does not provide access to or connect to a service, such as the public network (e.g., the Internet).

The "on-board service availability" can be a wirelessly broadcast signal or message that a service (e.g., a public network such as the Internet) is available via or through the Wi-Fi access point. The "public network" can be the network connection to the Internet or another public packet switched network (e.g., using a satellite connection of a vehicle). Other available services may be any onboard services, such inflight entertainment, games, audio, or any on-board service that comes from servers on the airplane, etc. For example, the on-board service availability for a wireless access point (e.g., the aircraft's Wi-Fi access point) can be present or active when the wireless access point (e.g., the aircraft's Wi-Fi access point) permits a mobile device to connect to a public network (e.g., the Internet) via the wireless access point (e.g., the aircraft Wi-Fi) to receive Internet packet transfer (e.g., TCP/IP). Conversely, the on-board service availability for the wireless access point (e.g., the aircraft's Wi-Fi access point) can be absent when the wireless access point (e.g., the aircraft's Wi-Fi access point) does not allow a mobile device to connect to a public network (e.g., the Internet) via the wireless access point (e.g., the aircraft's Wi-Fi access point).

The transfer of wireless connectivity for a mobile device can occur between any of a number of connection types. As used herein, "seamless wireless connectivity" refers to wireless connectivity that can switch between wireless connections such as a wireless personal area network (WPAN), a wireless local area network (WLAN), a wireless wide area network (WWAN), or a wireless metropolitan area network (WMAN), and so forth, without a substantial disruption in public network service (e.g., without a disruption in connectivity and service to the Internet that is longer than a selected time including one or more of 200 milliseconds, 1 second, 5 seconds, 15 seconds, 60 seconds, 5 minutes, or the like). The switch may be between like or different network types. In addition, "seamless wireless connectivity" may optionally or alternatively include operations that can be taken to maintain wireless connectivity without a user's intervention and the wireless connectivity can be maintained automatically. This means the present technology may be used by a mobile device to switch between wireless networks that provide access to one or more services, such as access to public or private networks.

Users may be more likely to connect to a local Wi-Fi access point (for example, an aircraft or another vehicle's Wi-Fi access point when traveling) when: (1) an "Available Wi-Fi network" message notifies users when the local Wi-Fi SSID is available to join, or (2) users are provided with device actionable data for joining the local Wi-Fi access point (for example, a scannable QR code). By clicking on an "Available Wi-Fi network" message or scanning the QR code, users can automatically: (i) join the Wi-Fi access point and (ii) get presented with the terms of service, and upon accepting the terms of service, be redirected to the airline portal for onboard network service (e.g., Internet access and/or on-board services).

The user may be reminded to join an aircraft's Wi-Fi access point, or such reminders may be eliminated to improve or maximize the chances of users connecting to the aircraft's Wi-Fi access point when the Wi-Fi connection is enabled and the Wi-Fi public network service (e.g., the Internet accessible via the aircraft's Wi-Fi access point) is operational. In one example, the travel service operator (e.g., airline) can determine logic for providing user notifications on the mobile device using various notifications, such as departure time based notifications, geolocation-based notifications, or the like. In one example, for a flight that departs at 7 PM, a notification can be sent to a user at a specific time before the flight departure time so that the user is reminded to join the aircraft's Wi-Fi access point. In another example, a notification can be sent to a user's mobile device when the user's mobile device has been detected in the proximity of an airport location, departure gate, or the like. In some embodiments, the notification may be used to prompt user action or action by an agent operating on the user's mobile device.

In addition to time-based, location-based, or other automated or electronic notifications on the user's mobile device, users can be notified of aircraft Wi-Fi using various other notifications, such visual (e.g., printed posters, QR codes, etc.) or audio notifications near the departure gate, visual notifications on the airplane, crew announcements, and the like. However, as noted above, the use of manual operations that are to be completed by a user to connect to a Wi-Fi access point can result in reduced adoption or connections on the part of users. Therefore, an automated process or a semi-automated process employing reduced user input (as compared to the manual operations of the example of FIG. 1) to enable a Wi-Fi connection on a vehicle is still useful.

An example process for connecting a mobile device to a vehicle's Wi-Fi access point to access a service (e.g., an on-board public network such as the Internet) can be depicted using a flowchart. FIG. 2 is a flowchart illustrating one example process for seamless wireless connectivity. Initially, an agent (such as a software agent, etc.) may execute on a mobile device, as in block 252. In one example embodiment, the agent may be executing in the background on an operating system of a mobile device, and the agent may have been loaded as a background process by the operating system (e.g., when the operating system started-up) on the mobile device. In an alternative embodiment, the agent may be executing on the mobile device because a user launched an application that contains the agent embedded in the application. For example, the user may launch the application: 1) through the mobile device's operating system (e.g., selecting the application from other applications), 2) by scanning a QR code and clicking on a link, or 3) by clicking on a notification that the Wi-Fi access point may be available.

The agent may detect the presence of the on-board connection availability and the on-board service availability for a service set identifier (SSID) broadcast by a Wi-Fi access point or gateway on an airplane, vehicle, or at a location, as in block 254. If the on-board connection availability is present but the on-board service availability is not present (e.g., is turned off or is not being broadcast) indicating there is no on-board public network access yet (e.g., no Internet connectivity), the agent may delay trying to connect to the Wi-Fi access point until the on-board service availability is present.

Under current technologies, when a user attempts to connect to an on-board public network (e.g., the Internet) via a Wi-Fi access point on a vehicle, a prompt from a network connection assistant (e.g., the Apple^{®} captive network assistant (CNA)) can typically be displayed by the mobile device to redirect the user to a specific webpage to authenticate or login to enable access to the on-board public network after connection of the mobile device to the Wi-Fi access point. This can be useful to remind the user of the URL for or direct the user to a specific website. However, when the on-board public network (or the Internet) is not available, or when there is any disruption to a process flow of the network connection assistant, then the network connection assistant prompt is more likely to confuse the user or even prevent connection and authentication to the public network than allow the user to connect and authenticate to the public network (e.g., the Internet). In one example, the agent described herein can be configured to suppress or bypass such a network connection assistant prompt or use associated with connecting and authenticating with the on-board public network based in part on the presence of the on-board service availability at the Wi-Fi access point.

When the onboard public network is available, the presentation of the network connection assistant can provide an additional operation for connecting to the onboard public network that can further deter user adoption. Thus, to further ease the process of connecting to the on-board public network, the agent can be configured to suppress the network connection assistant and automatically authenticate or login to the Wi-Fi access point and connection to a service provided by the Wi-Fi access point based in part on the on-board connection availability and the on-board service availability being currently active or present. In the method of FIG. 2, the agent may suppress the network connection assistant on the mobile device and authenticate or login to the Wi-Fi access point and service, as in block 256. By authenticating to the Wi-Fi access point in the background, the user can connect to the on-board public network without additional effort on the user's part, as in block 258.

In one example embodiment, this suppression of the network connection assistant may be implemented by circumventing the network connection assistant and the agent can make programmatic calls (e.g., API calls) to connect, authenticate and/or login to the Wi-Fi access point and the corresponding service being accessed. The agent may have already received authentication credentials from an entity, such as an Internet service provider, a transport vendor (e.g., an airline), a travel website, a venue manager, or another party. A connection to the on-board public network (e.g., the Internet) may then be made through a wireless access point, as in block 258. The wireless access point may be a Wi-Fi access point, a Wi-Fi gateway, a wireless gateway, a wireless router, a wireless switch, etc.

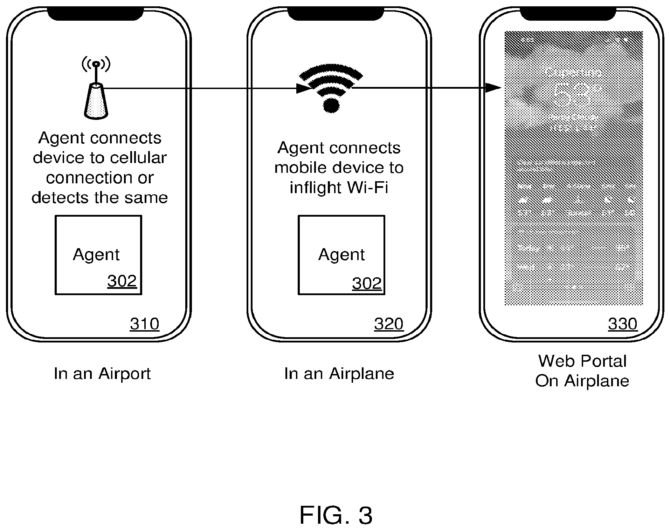

FIG. 3 illustrates an example embodiment of the present technology for seamless connectivity of a mobile device (e.g., a mobile phone) to a wireless access point of an airplane. This example illustrates a mobile device switching from a wireless cellular connection (e.g., 3GPP LTE, 3GPP 5G, etc.) to a Wi-Fi access point that is on-board an airplane or another vehicle. In an airport or prior to coming in proximity to an airplane or vehicle, an agent 302 that is executing on a mobile device may connect the mobile device to a wireless cellular connection, as in item 310. Alternatively, the agent 302 may detect or be aware that the mobile device is already connected to a wireless cellular connection (e.g., such as a mobile phone connection).

When the user is in or at a gate for the airplane, the agent 302 may detect that the on-board connection availability and the on-board service availability are active for a service set identifier (SSID) broadcast by a Wi-Fi access point on the airplane for in-flight Wi-Fi. This means that Wi-Fi connectivity and the public network (e.g., Internet) are available and detected.

Accordingly, the agent 302 can connect the mobile device to the in-flight Wi-Fi, as illustrated in item 320, which can automatically switch the mobile device's connectivity from the wireless cellular connection (e.g., 3GPP LTE, 3GPP 5G, etc.) to the airplane's in-flight Wi-Fi access point and connect to the service via the Wi-Fi access point without or with minimal user intervention. In order to automatically connect the mobile device to the Wi-Fi access point, the agent 302 may suppress or circumvent a network connection assistant.

Once the mobile device is connected to the Wi-Fi access point, the mobile device may access a web portal on the airplane 330, the on-board public network (e.g., the Internet), and so forth. For example, a user may access a web portal or web services that are: a captive end user interface, a captive airline portal, a captive internet service provider portal, web services, an entertainment services portal, advertising, an electronic store, a duty free store, games, travel services, vacation service bookings, educational microsites, the Internet, etc. Optionally, there may be terms and conditions that a user may need to accept in order to receive the Internet service through the Wi-Fi access point. In addition, an initial free session may be provided to the user with the mobile device and then additional Internet time may be purchased.

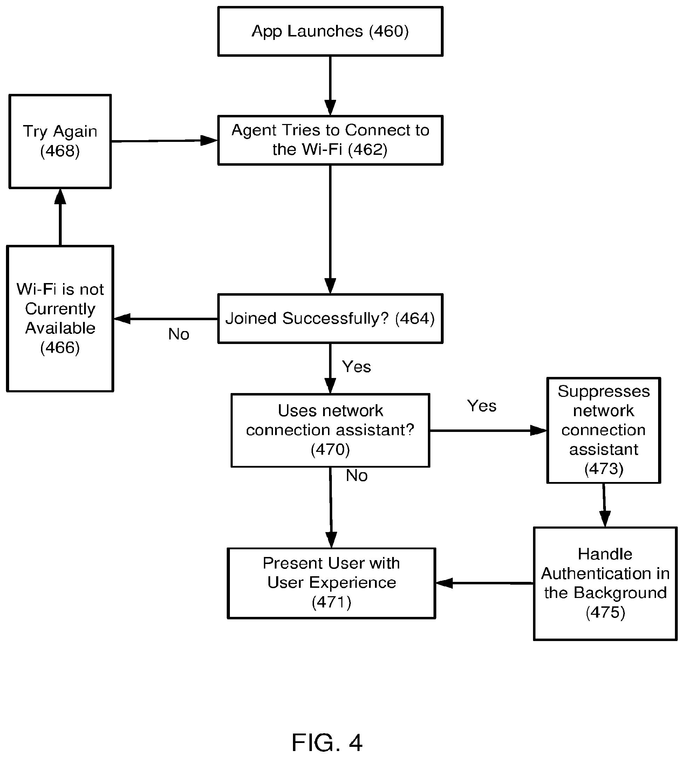

FIG. 4 illustrates another example of seamlessly connecting to a Wi-Fi access point where the user initiates the launching of the agent on the mobile device and user input may be received at other points in the process. More specifically, the user may launch the agent within an application (app), as in block 460. There may be at least three alternatives where users may be notified to join the wireless connection using an application with an agent. In a first scenario, an app can be opened through an operating system interface by a user, and this may entail launching the app by tapping on the app, clicking on the app, double clicking on the app, or otherwise selecting the app to execute on the mobile device. The app can be a third-party app associated with a travel service operator (e.g., Expedia^{®}, Travelocity^{®}, Kayak^{®}, or the like), a first-party app associated with an airline (e.g., Delta^{®}, American^{®}, United^{®}), an app associated with an operating system, or be associated with an event provider or ticket distributer (e.g., Ticketmaster^{®}, StubHub^{®}, sports venues, or the like), healthcare provider, and so forth. In another configuration, the app can be implemented in association with or comprise an operating system (e.g., iOS^{®}, Android^{®}, etc.). After the app has been launched or opened (or even when the app or agent is operating in the background or a background process), the app can present the user with a button to join a vehicle's Wi-Fi access point, and the app can enable the user to click the join button.

In another example, in a second scenario for launching the app, a camera app can be opened (e.g., by a user). The camera can be configured to scan a QR code (or a different type of machine-readable optical label) to access and launch or open a URL or app automatically by the device without user involvement. After the URL or app has been launched, the app can be open as shown, as in block 460.

In a third example scenario, a notification can be received by a user from an agent on the mobile device that the vehicle's Wi-Fi access point is available. The user can click the notification (e.g., a pop-up window), or the notification can be acted on without user intervention.

In the third scenario for opening the app, presentation of the notification can be contingent on one or more factors such as wireless access point (WAP) geolocation, WAP altitude, WAP velocity, on-board public network signal strength, vehicle door status, vehicle boarding data, vehicle check-in data, other factors discussed in this description, and the like.

Upon the opening of the app, as shown in block 460, an agent on the mobile device can be configured to attempt to connect to the wireless access point (e.g., a vehicle Wi-Fi), as shown in block 462. The agent can be a process created or launched from a software development kit (SDK) having a library that can be embedded into the app. In one example embodiment, the agent from the SDK library can detect data, such as geolocation data, that can be used for notifying a user about Wi-Fi availability. The agent from the SDK library can also use other data such as a signal to noise ratio, incoming blue tooth beacon signals, departing gate data, departing airport data, boarding pass data, schedule information, etc., which the agent may detect prior to notifying a user about Wi-Fi availability.

The agent may then determine whether the Wi-Fi access point has been joined successfully, as in block 464. If the agent on the mobile device is not able to successfully connect to the wireless access point or receive on- board network services (e.g., Internet packets) at block 466, then the agent can automatically (or after receiving user intervention) try again to connect with the Wi-Fi access point (or even another Wi-Fi access point), as shown in block468. The agent may also revert back to a previous or original wireless connection (e.g., wireless cellular connection) if the agent determines that the Wi-Fi connection is not available after a defined number of reconnection attempts (e.g., two or three attempts).

When the wireless access point has been successfully joined after block 464, the agent can be configured to determine whether the passenger carrier operator (e.g., an airline) uses a network connection assistant (e.g., the Apple^{®} captive network assistant (CNA)), as shown in block 470. When the passenger carrier operator or network service provider uses a network connection assistant, the agent can be configured to bypass or suppress the network connection assistant and any related prompt, as shown in block 473. The network connection assistant can be associated with the Wi-Fi access point, and the agent can be configured to bypass the network connection assistant when connecting to the Wi-Fi access point based in part on the on-board service availability for the on-board public network. That is, when the service for the on-board public network (e.g., the Internet) for the vehicle is available (e.g., the on-board service availability is present), the agent can be configured to bypass the network connection assistant to reduce the time used to access the Wi-Fi access point or on-board public network. By bypassing the network connection assistant, the agent can also prevent the user from being notified that the wireless access point (e.g., the aircraft Wi-Fi) is available when the service for the wireless access point is not available. In some embodiments where the Wi-Fi access point is not associated with any network connection assistant or the network connection assistant is inactive, etc., the agent can be configured to operate as if the agent has bypassed the network connection assistant. More specifically, if the network connection assistant does not exist or is not active for a Wi-Fi access point, then the operation of bypassing or suppressing the network assistant may be skipped.

In some embodiments, the network connection assistant is bypassed regardless of the presence of the on-board service availability. For example, if the passenger carrier operator (e.g., an airline) uses a network connection assistant to authenticate and otherwise activate the on-board service and the agent has bypassed the network connection assistant, then the agent can be further configured to authenticate or login to the Wi-Fi access point (e.g., to access the on-board public network) and further to enable or activate the on-board service. The authentication or login may proceed based in part on the wireless access point connection availability (more specifically, the connection availability for the on-board public network) and/or the wireless access point service availability (more specifically, the service availability for the on-board public network or service availability for on-board services), as shown in block 475.

After the agent has bypassed the network connection assistant and authenticated using the network connection assistant, the agent can be configured to open a browser and the user may be presented with a user experience, as shown in user experience 471 block. Alternatively, when the passenger carrier operator (e.g., an airline) does not use a network connection assistant, the agent can be configured to open the browser and provide a user experience 471 without carrying out additional network connection assistant operations, or the agent can perform those additional network connection assistant operations in the background without user input or involvement. Part of the user experience may optionally be displaying the terms and conditions page. After the user has accepted the terms and conditions, the mobile device can be connected to the on-board public network (e.g., the Internet) and/or other available services. Examples of other types of user experiences may be a connection to the Internet or a web portal (e.g., a captive web portal) for other on-board services, such as accessing entertainment, video, audio, shopping, games, microsites, or other on-board electronic experiences.

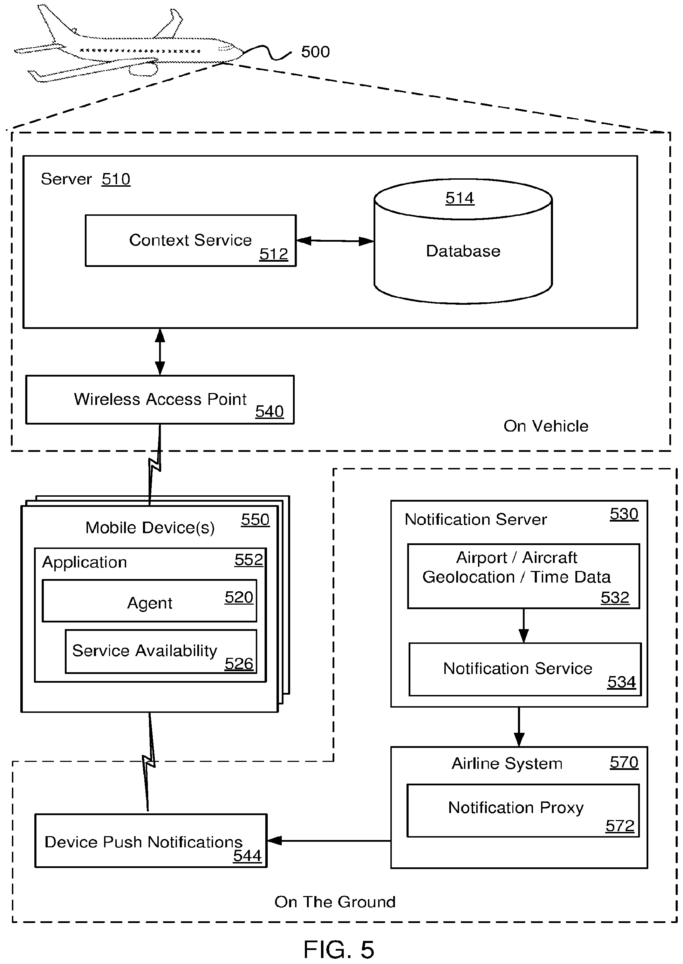

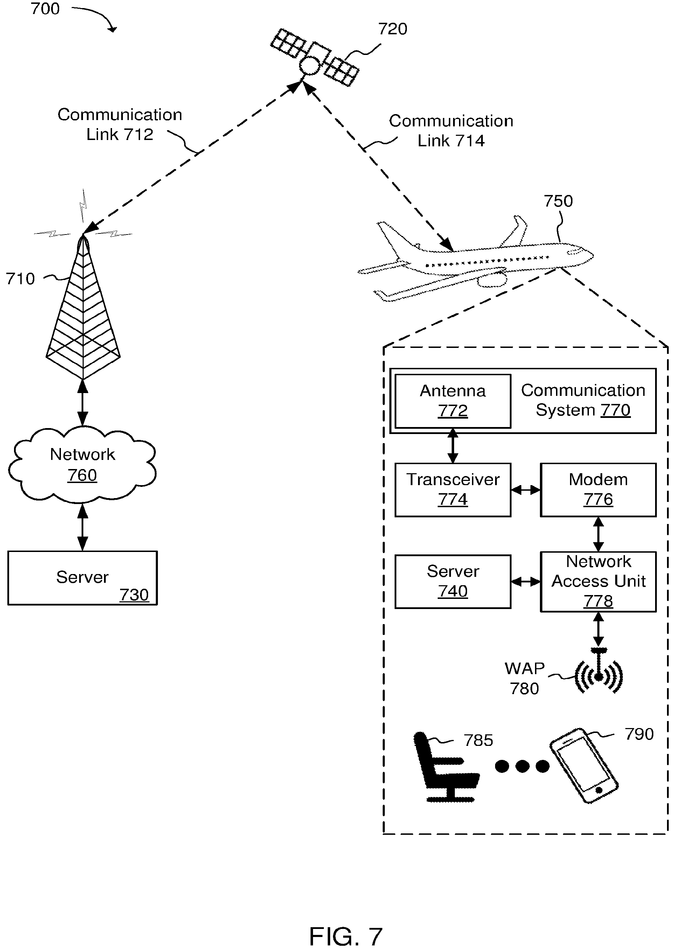

In one example embodiment, a system for seamless wireless connectivity is illustrated in FIG. 5. In this example, an aircraft 500 can be configured to include a server 510 and a wireless access point 540. The wireless access point 540 can be configured to connect to one or more mobile devices 550. The server 510 can include a context service 512 and a database 514. The user's mobile device 550 can retrieve information regarding services available on the airplane, flight service context or flight information (e.g., altitude, speed, information from the airplane bus, etc.) from the context service 512. The server 510, wireless access point 540 and access to a public network (e.g., the Internet) are also described in FIG. 7.

As previously described, the wireless access point 540 can provide a Wireless Local Area Network (WLAN). More specifically, the wireless access point 540 can be a Wi-Fi access point or gateway for a vehicle including, but not limited to, an aircraft, a bus, a train, a ship, or the like. In other examples, the wireless access point 540 can operate using a Wi-Fi protocol (or a suitable WLAN), a Bluetooth^{®} protocol (or a suitable WPAN), or another appropriate wireless protocol (e.g., a beacon-based protocol such as iBeacon^{®}).

The mobile device(s) 550 may be, for example, processor-based systems. The mobile device(s) 550 may be devices such as, but not limited to, mobile phones, laptops or notebook computers, tablet computers, mobile devices, handheld computers, or other devices with similar capability. The mobile device(s) 550 can be personal electronic devices or can be property of an aircraft operator. In one configuration, the server 510 can communicate with the mobile device(s) 550 via a wireless network, such as that provided by the wireless access point 540.

The various processes and/or other functionality contained within the server(s) 510 can be executed on one or more processors that are in communication with one or more memory modules. The server(s) 510 can include a number of computing devices that are arranged, for example, in one or more server banks or computer banks or other arrangements. The server 510 may also contain a number of data stores for capturing and storing passenger information, flight information, destination information, transaction information, media, etc.

The term "data store" can refer to any device or combination of devices capable of storing, accessing, organizing and/or retrieving data, which can include any combination and number of data servers, relational databases, object oriented databases, cluster storage systems, data storage devices, data warehouses, flat files, and data storage configuration in any centralized, distributed, or clustered environment. The storage system components of the data store can include storage systems such as a SAN (Storage Area Network), cloud storage network, volatile or non-volatile RAM, optical media, or hard-drive type media. The data store can be representative of a plurality of data stores. In some embodiments, the data store can be used to store data associated with one or more services provided via the wireless access point 540.

FIG. 5 illustrates that certain processing modules or subsystems can be used in connection with this technology. In one example configuration, a module or subsystem can be considered to provide a service with one or more processes executing on a server or other computer hardware. For example, modules or subsystems providing services can be hosted in the server. An application programming interface (API) can be provided for each module or subsystem to enable a second module or subsystem to send requests to and receive output from the first module or subsystem. Such APIs can also allow third parties to interface with the module or subsystem and make requests and receive output from the modules or subsystems.

While FIG. 5 illustrates an example of a system that can implement the techniques above, many other similar or different environments are possible. The example environments discussed and illustrated above are merely representative and not limiting.

The mobile device 550 can include an application 552 that may have an agent 520. The agent 520 can be used to detect and connect to a Wi-Fi access point, such as the wireless access point 540, to access services (e.g., the Internet) provided through the Wi-Fi access point when available and can be used to suppress the network connection assistant, as discussed earlier.

As illustrated in FIG. 5, a notification server 530 can include a notification service 534. The notification service 534 can be used by an entity to initiate and send notifications regarding connecting the mobile device 550 to on-board Wi-Fi access points. Notifications can be sent to a user's mobile device 550 based in part on: the user being in a defined area in an airport, an aircraft geolocation, time data, event information, other triggers described in this description, and similar data (or data triggers) stored in a data store 532.

The notification service 534 can send a notification to a notification proxy 572 hosted on an airline system 570 (or a proprietor system, physical venue system, vehicle management system, etc.). The notification proxy 572 can forward the notifications about Wi-Fi availability to the mobile device 550 via device push notifications 544. The device push notifications 544 may be managed or provided by a wireless carrier, a cloud messaging provider or other server based messaging services. In addition, the device push notifications 544 may be sent through a wireless cellular connection, a ground based Wi-Fi access point in the airport or venue, or another network prior to connecting to the Wi-Fi access point on the plane, for example. The notification service 534 and notification proxy 572 may be separate because the airline app may not have the agent and/or the airline may not be the originator of the notifications. In some embodiments, one or more of the notification service 530 and the airline system 570 may be combined along with their corresponding services, etc. In some embodiments, the device push notifications 544 may indicate: an on-board service availability is present, authentication information for the agent 520 to use when accessing the on-board service, and so forth.

Optionally, a service availability module 526 may be provided in the application 552, and the service availability module 526 may connect using a wireless cellular connection to a cloud service or cloud data store that reports whether an on-board Wi-Fi access point connection and/or on-board service is available. For example, the service availability module 526 may receive the device push notifications 544 from the airline system 570 and determine whether the on-board service is available or active based at least in part on these device push notifications 544. If the service availability module 526 determines that Wi-Fi and/or on-board service is available, then the agent may start the connection process to the Wi-Fi access point 540. In some embodiments, the service availability module 526 may determine that Wi-Fil and/or on-board service is available based on timing information and event or schedule information available via the mobile device 550. For example, the agent 520 may have access to the user's schedule or email on or via the mobile device 550 and may use event information obtained therefrom to determine that Wi-Fi and/or on-board service is available, Where the on-board service may correspond to a service provided at any location where the event does not involve the user being in transit when using the Wi-Fi and/or on-board service.

In one example embodiment, the agent 520 can be configured to detect an on-board connection availability (i.e., availability to connect to aircraft Wi-Fi in the case of an aircraft) for an on-board public network (e.g., Internet service) from a Wi-Fi access point on-board a vehicle (e.g., an aircraft). The agent 220 can detect the on-board connection availability by using a probe request or an announcement when the mobile device is within range of the aircraft Wi-Fi. Such detection by the agent 220 is not limited to just in-transit or in vehicle connection availability detection and may apply in any environment where a Wi-Fi connection can be available (e.g., venues, transit centers, appointment locations, etc.).

In another example embodiment, the agent 520 can be further configured to detect an on-board service availability for the on-board public network. The on-board service availability can be broadcast when the on-board public network (e.g., the Internet) is available through the Wi-Fi access point. For example, in the case of an aircraft, the in-flight entertainment service may be operational before the aircraft door has been closed, or before the flight has reached an adequate cruising altitude (e.g., about 10,000 feet), and therefore, the in-flight entertainment service, which can operate using the aircraft Wi-Fi connection, can provide content to a user. Thus, for the user wishing to browse or browsing in-flight media, the agent on the user's mobile device may automatically connect the mobile device to the Wi-Fi access point having the in-flight entertainment service active and available for use. However, the Wi-Fi access point may not enable a connection to an on-board public network (e.g., the Internet) until the aircraft has obtained a satellite connection to the public network and is above 10,000 feet. Thus, for the user wishing to browse or browsing the Internet, the agent on the user's mobile device may delay connecting the device to the Wi-Fi access point until the on-board public network is active and available for use. Therefore, the agent 220 can be configured to detect when the on-board public network connection is actually connected to the internet (i.e., the service for the on-board public network is available). Such detection by the agent 220 is not limited to just service availability detection on vehicles and may apply in any environment where a Wi-Fi connection can provide a service, such as the Internet, and so forth.

In order to prevent users from joining the aircraft's Wi-Fi access point before the on-board public network is connected to the Internet, which may cause user frustrations, concerns, etc., the agent 520 can be configured to enable a notification regarding connecting to the on-board public network (e.g., the Internet) based in part on the on-board connection availability (e.g., whether the client device can connect to the aircraft's Wi-Fi access point) and the on-board service availability (e.g., whether the aircraft Wi-Fi is actually connected to the Internet). More specifically, the mobile device 550 may be configured to provide a notification to a user when the airplane's Wi-Fi access point actually has functional Internet service. This avoids the situation where Wi-Fi bars show up on a mobile device 550 and the user might think they can use the Internet, but when the user opens their browser there is no data because the Wi-Fi access point on the aircraft is not connected to the Internet. In another example, the agent 520 can enable a connection to the on-board public network (e.g., the Internet) to occur after the notification regarding connecting to the Internet has been displayed to a user of a mobile device and approved by the user.

When a user is departing from one aircraft to connect to a different flight or to leave the airport, seamless wireless connectivity when transitioning from being on-board an aircraft to being at the airport and/or to another aircraft may also be desirable. In one example, the agent 520 on the user mobile device 550 can be configured to switch from the on-board public network connection (e.g., the aircraft Wi-Fi) to an off-board public network connection (e.g., airport Wi-Fi or a 3GPP 4G, 3GPP LTE, or 3GPP 5G network) based in part on termination of the on-board connection availability (e.g., the aircraft Wi-Fi connection has been terminated) or the on-board service availability (e.g., the aircraft Wi-Fi is no longer connected to the Internet) and availability of the off-board public network connection and Internet service.

The agent 520 can be configured to determine the on-board service availability or the on-board connection availability in various ways, as introduced above. In one example, a wireless access point's geolocation or GPS coordinates, elevation, speed, flight status, state, time information, and so forth, can be used to determine the on-board service availability and/or the on-board connection availability. For example, when a user's mobile device 550 enters within a specific range of the wireless access point as defined by GPS coordinates or geofencing, then the agent 520 can be configured to determine that the on-board connection and/or the on-board service is available. In some embodiments, the agent 520 of the user's mobile device 550 may determine the on-board connection availability based on being able to exchange handshaking information with the wireless access point. The agent 520 may further determine that the on-board service is available based on receiving a push notification 544, determining that desired data packets can be communicated correctly with a desired target via the on-board connection, and so forth.

In another example, a wireless access point altitude can be used to determine the on-board service availability and/or the on-board connection availability. When the wireless access point reaches a selected altitude threshold (e.g., 10,000 feet), then the agent can be configured to determine that the on-board service and/or the on-board connection is available.

The agent 520 can also be configured to determine the on-board service availability when the wireless access point reaches a specific speed threshold, altitude threshold, or direction of travel. In this situation, the mobile device 550 may be connected to the Wi-Fi access point and receive information from services on the airplane (e.g., an inflight entertainment system (IFE)) or information from the airplane bus about speed or direction, but the mobile device 550 may not yet have access to the on-board public network (e.g., the Internet). For example, an aircraft might reach a speed threshold of about 288 mph (miles per hour) once the aircraft has exceeded an altitude of 10,000 feet which would indicate that the on-board public network (e.g., the Internet) and/or the onboard network service is available. Also, an aircraft might travel in a specific direction when an adequate cruising altitude for Wi-Fi service has been reached. In both cases, the speed of travel and/or the direction of travel can be used by the agent 520 to determine the on-board service availability.

The signal strength of the wireless access point can also be used to determine the on-board connection availability. The signal strength of the wireless access point can be used by the agent determine when a selected signal threshold has been exceeded and the onboard connection is available.

The vehicle door status can also be used to determine whether the on-board service or onboard connection is available. For example, an aircraft Wi-Fi may not be activated until the cabin door of the aircraft has been closed. As such, the Wi-Fi service or connection can be assumed to be inactive when the cabin door is open, and the agent 520 may operate accordingly.

The vehicle boarding data or the vehicle check-in data can be used by the agent 520 to determine whether the on-board service or onboard connection is available. The vehicle boarding data can include at least one of: boarding time, boarding priority, seat interactions, baggage check-in, or the like. The vehicle check-in data can include at least one of: a check-in time, a check-in priority, or the like.

The on-board service availability for the on-board public network can also be determined by querying a cloud-computing environment. In one example, when the mobile device is connected to an off-board wireless service a query can be made to a cloud computing environment which can include retrieval of a service availability indicator. The agent 520 can be configured to identify the on-board service availability of the Wi-Fi access point on a vehicle by querying the cloud-computing environment. Thus, the agent 520 may use any of various methods to determine one or more of the on-board connection availability and/or service availability before enabling connection of the mobile device 550 to the wireless access point and the on-board service.

When the Wi-Fi access point exists in a venue and provides service and connection at the venue, the agent 520 may use event data to determine whether the service or connection is available at the venue. The event data can include at least one of: start/end time, priority associated with the user (for example, level of ticket purchased, etc., seat interactions, or the like), current time, venue check-in, and so forth. The venue check-in data can include at least one of: a check-in time, a check-in priority, or the like.

In one example, the agent 520 can be configured to enable the notification regarding connecting to the on-board public network by providing an onboard service availability notification on the mobile device 550 that the on-board public network connection is available. The notification can be a notification that is local to the mobile device 550, and the notification may be an audible notification, visual notification (e.g., a pop up window) or tactile notification (e.g., a vibration).

To avoid user frustration, connections to the public network can be discouraged until the on-board public network (e.g., Internet) connection and service are available. In one example, the agent 520 can be configured to provide the notification regarding connecting to the on-board public network by displaying an unavailability notification on the mobile device while the on-board public network connection (e.g., the Internet) is not available.

In addition to switching from an off-board public network (e.g., airport Wi-Fi, or a WWAN such as 3GPP 4G, LTE, or 5G) to an on-board public network (e.g., the aircraft Wi-Fi), an agent 520 on a mobile device can switch between different off-board public networks. In one example, the agent 520 can be configured to switch from a first off-board public network connection to a second off-board public network connection, based in part on: the first off-board connection availability and the first off-board service availability, and/or the second off-board connection availability and the second off-board service availability, mobile device 550 location, expected travel for the user of the mobile device 550, and so forth.

In one example embodiment, the first off-board public network connection can be a WWAN network (e.g., a 3GPP 5G network) and the second off-board public network connection can be a WLAN network (e.g., airport Wi-Fi). In another example, the first off-board public network connection can be a WLAN network (e.g., airport Wi-Fi) and the second off-board public network connection can be a WWAN network (e.g., a 5G network). Thus, the agent 520 can be configured to switch a mobile device 550 from an airport Wi-Fi network to a 3GPP 5G network when a user is leaving an airport or switch the mobile device 550 to the airport Wi-Fi network from the 3GPP 5G network when the user is arriving at the airport, or switch from the 3GPP 5G network to a WLAN network at a doctor's office or other appointment/event location. In another example embodiment, a user's mobile device 550 may switch between multiple Wi-Fi access points in an airport. As a further example embodiment, the user's mobile device 550 may switch between Wi-Fi offered in a bus or ride sharing vehicle and Wi-Fi offered in an airport, etc.

In FIG. 5, one dotted box (i.e., labeled "On Vehicle") illustrates devices, servers or other hardware that may be physically located on a vehicle (e.g., the plane). The mobile devices 550 may inside or outside the vehicle depending on movement of the devices. For example, the mobile devices 550 (e.g., a mobile phone) may be physically located on the plane but may be moved off the airplane. Some of the servers, devices or modules may not be located physically on the airplane and may be outside the airplane because they are part of a data infrastructure that may be located in various locations in a computer network, as desired. This ground location of devices is illustrated in FIG. 5 by a second dotted box (i.e., labeled "On The Ground") which represents that the systems or devices which may not be at the location of the Wi-Fi access point and/or may be on the ground.

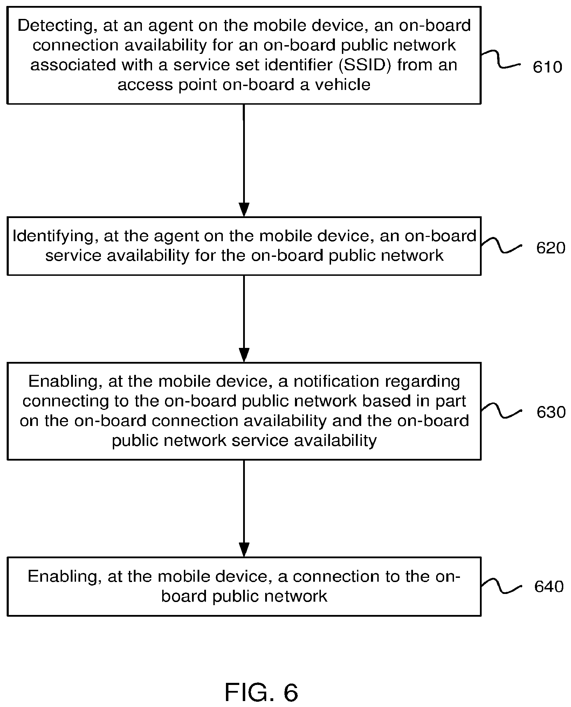

FIG. 6 illustrates an example of a method for seamless wireless connectivity for a mobile phone on a vehicle. An agent on the mobile device can be configured to detect an on-board connection availability for an on-board public network associated with a service set identifier (SSID) from a wireless access point (e.g., a wireless gateway, a wireless access device, a server, a wireless router, switch, modem, etc.) on-board a vehicle, as in block 610. For example, an agent on a mobile phone can detect the SSID and the on-board connection availability of a Wi-Fi access point on an airplane. The agent used for this operation may be the same agent illustrated as 520 in FIG. 5 and illustrated as 302 in FIG. 3. The agent on the mobile device can be configured to identify an on-board service availability for the on-board public network, as in block 620. The on-board service availability may represent the availability of Internet access to the mobile phone through the Wi-Fi access point.

The agent on the mobile device can be configured to enable a notification regarding connecting to the on-board public network based in part on the on-board connection availability and the on-board service availability, as in block 630. For instance, the agent may provide a pop-up notification on a phone about either an automatic connection already made or the ability of a user to approve of making the connection to the Wi-Fi access point when the on-board connection availability and the on-board service availability are both active (e.g., are turned on). The agent on the mobile device can be configured to enable a connection to the on-board public network, as in block 640. Thus, the agent can connect the mobile phone to the Wi-Fi gateway and ultimately the Internet, in this example. The method and the corresponding blocks discussed herein (610, 620, 630, 640) can be implemented and stored on a machine-readable storage medium having instructions embodied thereon, wherein the instructions, when executed by one or more processors, can cause the one or more processors to perform a process comprising the method.

While much of the description of the present technology focuses on aircraft Wi-Fi and vehicles, this technology may apply to a Wi-Fi access point connection and Internet service connection that may be automatically made at any location where the user has a reason to be. Examples of locations where the present technology may be used may include hotels, public venues (concerts, sporting events, entertainment venues), doctors' offices, appointments, theaters, gyms, or other locations. Accordingly, this technology may provide a streamlined way for users to get connected to a Wi-Fi access point and corresponding service and can be used any time a user is at a location that provides such Wi-Fi connectivity and corresponding service.

FIG. 7 illustrates an example of a satellite communication system 700. The satellite communication system 700 can include satellite(s) 720 in bidirectional communication with a ground station 710 via a first communication link 712 between the satellite 720 and the ground station 710. The satellite 720 can also be in bidirectional communication with an aircraft 750 (e.g., an airplane, helicopter, blimp, or balloon) via a communication link 714 between the satellite 720 and the aircraft 750. The communication link 712 and the communication link 714 can enable communication between the aircraft 750 and the ground station 710 via the satellite 720 while the aircraft 750 is stationary or in motion.

In one example, the satellite communication system 700 can include multiple satellites 720, where each satellite 720 can provide coverage for a service area, and service areas for different satellites can be non-overlapping or overlapping. The satellite communication system 700 can be any suitable type of satellite system, including a geostationary satellite system, medium earth orbit satellite system, low earth orbit satellite system, or combinations thereof. The satellite 720 can have a number of beams directed at different regions on Earth, where the coverage area of each beam can be non-overlapping or overlapping with one or more other beams. The satellite 720 can have one or more spot beams covering different regions on Earth within the service area of the satellite 720. As another example, the satellite 720 can have one or more wide area coverage beams covering the service area of the satellite 720. As yet another example, the satellite 720 can have a combination of spot beams and wide area coverage beams.

In one configuration, the aircraft 750 can include a communication system 770 to facilitate bidirectional communication with the satellite 720 via the communication link 714. The communication system 770 can include an antenna 772 to receive a downlink signal from the satellite 720 and transmit an uplink signal to the satellite 720 via the communication link 714. The aircraft 750 can include a transceiver 774 in communication with the antenna 772, a modem 776 in communication with the transceiver 774, a network access unit 778 (e.g., a router) in communication with the modem 776, and a wireless access point (WAP) 780 in communication with the network access unit 778. Further, the wireless access point 780 can communicate with one or more client devices in the aircraft 750, such as seatback systems 785 and/or client devices 790 (e.g., mobile phones, tablets, laptops) in the aircraft 750. Therefore, the communication system 770 can receive a downlink signal from the satellite 720 and forward the downlink signal to the client devices and receive an uplink signal from the client devices and forward the uplink signal to the satellite 720, thereby supporting two-way data communications between the client devices within the aircraft 750 and the satellite 720. In one configuration, the network access unit 778 can be in communication with a server 740 (such as the server 510 described earlier) onboard the aircraft 750.

In one example, the aircraft can comprise a seatback system 785 that can be a fixed or on-aircraft device. The seatback system 785 can communicate with the server 740 via a wired communication link. For example, the seatback system 785 can communicate with the network access unit 778 over a wired communication link, and the network access unit 778 can communicate with the server 740 over a wired communication link. Alternatively, the seatback system 785 can communicate with the server 740 via the network access unit 778 and the wireless access point 780. The seatback system 785 can execute one or more applications that provide an interface for users on the aircraft 750 to obtain and consume data.

In another example, the client device 790 can receive and display data, and can be brought onto the aircraft 750 by users (which can include passengers or crew members). The client devices 790 can execute one or more applications that provide the interface for users to obtain and consume data. The user can have the option to select/request data for viewing from the interface. When a user interacts with the client device 790, the client device 790 can transmit a request for data to the network access unit 778 via the wireless access point 780. The client device 790 can receive requested data from the network access unit 778 via the wireless access point 780. Thus, the wireless access point 780 can provide communication between the network access unit 778 and the client device 790.

In one example, the network access unit 778 can receive requests for data from the client device 790 via the wireless access point 780 and multiplex and forward the requests to the modem 776. The network access unit 778 can receive and demultiplex packets associated with the data and forward the data to the client device 790 via the wireless access point 780.

In one example, the modem 776 can receive requests for data from the network access unit 778, and the modem 776 can generate modulated data (e.g., a transmit intermediate frequency (IF) signal) for delivery to the transceiver 774. Further, the modem 776 can receive requested data as a modulated data (e.g., a receive intermediate frequency (IF) signal) from the transceiver 774 and demodulate that data for transmission to the network access unit 778. In one example, the modem 776 can be integrated with the network access unit 778, or alternatively, the modem 776 and the network access unit 778 can be separate components.

In one example, the transceiver 774 can up-convert and amplify modulated data received from the modem 776 to generate an uplink signal for transmission to the satellite 720 via the antenna 772. Similarly, the transceiver 774 can receive a downlink signal from the satellite 720 via the antenna 772. The transceiver 774 can then amplify and down-convert the downlink signal to generate modulated downlink data (e.g., a received IF signal) for demodulation by the modem 776.

In one example, the ground station 710 can also be referred to as an access node, a hub, or a gateway. The ground station 710 can include an antenna to transmit an uplink signal to the satellite 720 and receive a downlink signal from the satellite 720. The ground station 710 can be in communication with a content server 730 via a network 760. The content server 730 can include media content, web content, and the like.

In one example, the network 760 can be any type of network and can include for example, an Internet, an Internet Protocol (IP) network, an intranet, a wide area network (WAN), local area network (LAN), a virtual private network (VPN), a virtual LAN (VLAN), a fiber optic network, a cable network, a public switched telephone network (PSTN), a public switched data network (PSDN), a public land mobile network, a cellular network, and/or any other type of network supporting communication as described herein. The network 760 can include both wired and wireless connections as well as optical links.

In one example, the ground station 710 can be provided as an interface between the network 760 and the satellite 720. The ground station 710 can receive data and information directed to the seatback system 785 and/or the client device 790 onboard the aircraft 750 from the content server 730 accessible via the network 760. The ground station 710 can format the data and information and transmit an uplink signal to the satellite 720 for subsequent delivery to the aircraft 750 (and then the seatback system 785 and/or the client device 790). Similarly, the ground station 710 can receive a downlink signal from the satellite 720 (e.g., containing requests, data and/or information originating from the seatback system 785 and/or the client device 790 on the aircraft 750) that can be directed to a destination accessible via the network 760. The ground station 710 can format the received downlink signal for transmission on the network 760.

In one configuration, the client device 790 can be onboard the aircraft 500. Alternatively, the client device 790 can be onboard other types of vehicles, such as trains, automobiles (e.g., cars, trucks, busses, etc.), watercraft (e.g., private boats, commercial shipping vessels, cruise ships, etc.) and others.

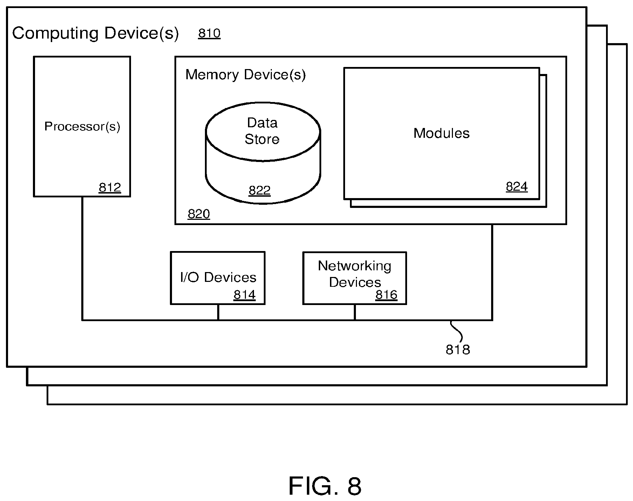

FIG. 8 illustrates a computing device 810 which can execute the foregoing subsystems of this technology. The computing device 810 and the components of the computing device 810 described herein can correspond to the servers, client devices and/or the computing devices described above. The computing device 810 is illustrated on which a high level example of the technology can be executed. The computing device 810 can include one or more processors 812 that are in communication with memory devices 820. The computing device can include a local communication interface 818 for the components in the computing device. For example, the local communication interface can be a local data bus and/or any related address or control busses as can be desired.

The memory device 820 can contain modules 824 that are executable by the processor(s) 812 and data for the modules 824. The modules 824 can execute the functions described earlier. A data store 822 can also be located in the memory device 820 for storing data related to the modules 824 and other applications along with an operating system that is executable by the processor(s) 812.

Other applications can also be stored in the memory device 820 and can be executable by the processor(s) 812. Components or modules discussed in this description that can be implemented in the form of software using high programming level languages that are compiled, interpreted, or executed using a hybrid of the methods.

The computing device can also have access to I/O (input/output) devices 814 that are usable by the computing devices. An example of an I/O device is a display screen that is available to display output from the computing devices. Other known I/O device can be used with the computing device as desired. Networking devices 816 and similar communication devices can be included in the computing device. The networking devices 816 can be wired or wireless networking devices that connect to the Internet, a LAN, WAN, or other computing network.

The components or modules that are shown as being stored in the memory device 820 can be executed by the processor 812. The term "executable" can mean a program file that is in a form that can be executed by a processor 812. For example, a program in a higher level language can be compiled into machine code in a format that can be loaded into a random access portion of the memory device 820 and executed by the processor 812, or source code can be loaded by another executable program and interpreted to generate instructions in a random access portion of the memory to be executed by a processor. The executable program can be stored in any portion or component of the memory device 820. For example, the memory device 820 can be random access memory (RAM), read only memory (ROM), flash memory, a solid state drive, memory card, a hard drive, optical disk, floppy disk, magnetic tape, or any other memory components.

The processor 812 can represent multiple processors and the memory 820 can represent multiple memory units that operate in parallel to the processing circuits. This can provide parallel processing channels for the processes and data in the system. The local interface 818 can be used as a network to facilitate communication between any of the multiple processors and multiple memories. The local interface 818 can use additional systems designed for coordinating communication such as load balancing, bulk data transfer, and similar systems.

While the flowcharts presented for this technology can imply a specific order of execution, the order of execution can differ from what is illustrated. For example, the order of two more blocks can be rearranged relative to the order shown. Further, two or more blocks shown in succession can be executed in parallel or with partial parallelization. In some configurations, one or more blocks shown in the flow chart can be omitted or skipped. Any number of counters, state variables, warning semaphores, or messages might be added to the logical flow for purposes of enhanced utility, accounting, performance, measurement, troubleshooting or for similar reasons.

Some of the functional units described in this specification may represent modules, in order to emphasize their implementation independence more particularly. For example, a module can be implemented as a hardware circuit comprising custom Very Large Scale Integration (VLSI) circuits or gate arrays, off-the-shelf semiconductors such as logic chips, transistors, or other discrete components. A module can also be implemented in programmable hardware devices such as field programmable gate arrays, programmable array logic, programmable logic devices or the like.

Modules can also be implemented in software for execution by various types of processors. An identified module of executable code can, for instance, comprise one or more blocks of computer instructions, which can be organized as an object, procedure, or function. Nevertheless, the executables of an identified module need not be physically located together but can comprise disparate instructions stored in different locations which comprise the module and achieve the stated purpose for the module when joined logically together.

Indeed, a module of executable code can be a single instruction, or many instructions, and can even be distributed over several different code segments, among different programs, and across several memory devices. Similarly, operational data can be identified and illustrated herein within modules and can be embodied in any suitable form and organized within any suitable type of data structure. The operational data can be collected as a single data set or can be distributed over different locations including over different storage devices. The modules can be passive or active, including agents operable to perform desired functions.

The technology described here can also be stored on a computer readable storage medium that includes volatile and non-volatile, removable, and non-removable media implemented with any technology for the storage of information such as computer readable instructions, data structures, program modules, or other data. Computer readable storage media include, but is not limited to, RAM, ROM, electrically erasable programmable read-only memory (EEPROM), flash memory or other memory technology, compact disc read-only memory (CD-ROM), digital versatile disks (DVD) or other optical storage, magnetic cassettes, magnetic tapes, magnetic disk storage or other magnetic storage devices, or any other computer storage medium which can be used to store the desired information and described technology.

The devices described herein can also contain communication connections or networking apparatus and networking connections that allow the devices to communicate with other devices. Communication connections are an example of communication media. Communication media typically embodies computer readable instructions, data structures, program modules and other data in a modulated data signal such as a carrier wave or other transport mechanism and includes any information delivery media. A "modulated data signal" means a signal that has one or more of its characteristics set or changed in such a manner as to encode information in the signal. By way of example, and not limitation, communication media includes wired media such as a wired network or direct-wired connections, and wireless media such as acoustic, radio frequency, infrared, and other wireless media. The term computer readable media as used herein includes communication media.

Reference was made to the examples illustrated in the drawings, and specific language was used herein to describe the same. It will nevertheless be understood that no limitation of the scope of the technology is thereby intended. Alterations and further modifications of the features illustrated herein, and additional applications of the examples as illustrated herein, which would occur to one skilled in the relevant art and having possession of this disclosure, are to be considered within the scope of the description.

In describing the present technology, the following terminology will be used: The singular forms "a," "an," and "the" include plural referents unless the context clearly dictates otherwise. Thus, for example, reference to an item includes reference to one or more items. The term "ones" refers to one, two, or more, and generally applies to the selection of some or all of a quantity. The term "plurality" refers to two or more of an item. The term "about" means quantities, dimensions, sizes, formulations, parameters, shapes, and other characteristics need not be exact, but can be approximated and/or larger or smaller, as desired, reflecting acceptable tolerances, conversion factors, rounding off, measurement error and the like and other factors known to those of skill in the art. The term "substantially" means that the recited characteristic, parameter, or value need not be achieved exactly, but that deviations or variations including, for example, tolerances, measurement error, measurement accuracy limitations and other factors known to those of skill in the art, can occur in amounts that do not preclude the effect the characteristic was intended to provide. Numerical data can be expressed or presented herein in a range format. It is to be understood that such a range format is used merely for convenience and brevity and thus should be interpreted flexibly to include not only the numerical values explicitly recited as the limits of the range, but also interpreted to include all of the individual numerical values or sub-ranges encompassed within that range as if each numerical value and sub-range is explicitly recited.

As an illustration, a numerical range of "about 1 to 5" should be interpreted to include not only the explicitly recited values of about 1 to about 5, but also include individual values and sub-ranges within the indicated range. Thus, included in this numerical range are individual values such as 2, 3 and 4 and sub-ranges such as 1-3, 2-4 and 3-5, etc. This same principle applies to ranges reciting only one numerical value (e.g., "greater than about 1") and should apply regardless of the breadth of the range or the characteristics being described. A plurality of items can be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Furthermore, where the terms "and" and "or" are used in conjunction with a list of items, they are to be interpreted broadly, in that any one or more of the listed items can be used alone or in combination with other listed items. The term "alternatively" refers to selection of one of two or more alternatives and is not intended to limit the selection to only those listed alternatives or to only one of the listed alternatives at a time, unless the context clearly indicates otherwise. The term "coupled" as used herein does not require that the components be directly connected to each other. Instead, the term is intended to also include configurations with indirect connections where one or more other components can be included between coupled components. For example, such other components can include amplifiers, attenuators, isolators, directional couplers, redundancy switches, and the like. Also, as used herein, including in the claims, "or" as used in a list of items prefaced by "at least one of" indicates a disjunctive list such that, for example, a list of "at least one of A, B, or C" means A or B or C or AB or AC or BC or ABC (i.e., A and B and C). As used herein, a "set" of elements is intended to mean "one or more" of those elements, except where the set is explicitly required to have more than one or explicitly permitted to be a null set.

Furthermore, the described features, structures, or characteristics can be combined in any suitable manner in one or more examples. In the preceding description, numerous specific details were provided, such as examples of various configurations to provide a thorough understanding of examples of the described technology. One skilled in the relevant art will recognize, however, that the technology can be practiced without one or more of the specific details, or with other methods, components, devices, etc. In other instances, well-known structures or operations are not shown or described in detail to avoid obscuring aspects of the technology.

Although the subject matter has been described in language specific to structural features and/or operations, it is to be understood that the subject matter defined in the appended claims is not necessarily limited to the specific features and operations described above. Rather, the specific features and acts described above are disclosed as example forms of implementing the claims. Numerous modifications and alternative arrangements can be devised without departing from the spirit and scope of the described technology.

The subject-matter of the present disclosure may be best understood with reference to the following clauses:
1. A method for wireless connectivity for a mobile device, comprising:
   detecting, at an agent on the mobile device, an on-board connection availability for an on-board public network associated with a service set identifier (SSID) from an access point on-board a vehicle;
   identifying, at the agent on the mobile device, an on-board service availability for the on-board public network;
   enabling, at the mobile device, a notification regarding connecting to the on-board public network based in part on the on-board connection availability and the on-board service availability; and
   enabling, at the mobile device, a connection to the on-board public network using the access point.
2. The method of clause 1, further comprising:
   switching, at the mobile device, from an off-board public network connection to an on-board public network connection based in part on the on-board connection availability and an on-board service availability.
3. The method of clause 1, further comprising:
   switching, at the mobile device, from the on-board public network to an off-board public network based in part on termination of the on-board connection availability or the on-board service availability.
4. The method of any one of clauses 1 to 3, further comprising:
   determining, at the mobile device, the on-board service availability or the on-board connection availability based in part on one or more of: a wireless access point (WAP) geolocation, a WAP altitude, a WAP velocity, an on-board public network signal strength, a vehicle door status, vehicle boarding data, or vehicle check-in data.
5. The method of any one of clauses 1 to 4, further comprising:
   querying, at the mobile device, the on-board service availability for the on-board public network connection from a cloud-computing environment.
6. The method of any one of clauses 1 to 5, further comprising:
   bypassing, at the mobile device, a network connection assistant prompt associated with the on-board public network based in part on no on-board service availability; and
   authenticating, at the mobile device, a network connection assistant associated with the on-board public network based in part on the on-board connection availability and the on-board service availability.
7. The method of any one of clauses 1 to 6, further comprising:
   enabling, at the mobile device, the notification regarding connecting to the on-board public network by displaying, at the mobile device, an availability notification on the mobile device that the on-board public network connection is available.
8. The method of any one of clauses 1 to 7, further comprising:
   enabling, at the mobile device, the notification regarding connecting to the on-board public network by displaying an unavailability notification on the mobile device that the on-board public network connection is not available.
9. The method of any one of clauses 1 to 8, wherein the notification is a local mobile device notification.
10. The method of any one of clauses 2, further comprising:
   switching, at the mobile device, from the off-board public network connection to an additional off-board public network connection, based in part on: an off-board connection availability and an off-board service availability, or an additional off-board connection availability and an additional off-board service availability,
   wherein the off-board public network connection and the additional off-board public network connections are at least one of a WWAN network and a WLAN network.
11. A mobile device for wireless connectivity, comprising:
   at least one processor; and
   at least one memory device including a data store to store a plurality of data and instructions that, when executed, cause an agent of the mobile device to:
      detect an on-board connection availability for an on-board public network associated with a service set identifier (SSID) from an access point on-board a vehicle;
      identify an on-board service availability for the on-board public network;
      enable a notification regarding connecting to the on-board public network based in part on the on-board connection availability and the on-board service availability; and
      enable a connection to the on-board public network.
12. The mobile device of clause 11, wherein the plurality of data and instructions, when executed, cause the agent of the mobile device to:
   switch from an off-board public network to the on-board public network based in part on the on-board connection availability and the on-board service availability.
13. The mobile device of clause 11, wherein the plurality of data and instructions, when executed, cause the agent of the mobile device to:
   switch from the on-board public network to an off-board public network based in part on termination of the on-board connection availability or the on-board service availability.
14. The mobile device of any one of clauses 11 to 13, wherein the plurality of data and instructions, when executed, cause the agent of the mobile device to:
   determine the on-board service availability or the on-board connection availability based in part on one or more of: a wireless access point (WAP) geolocation, a WAP altitude, a WAP velocity, an on-board public network signal strength, a vehicle door status, vehicle boarding data, or vehicle check-in data.
15. The mobile device of any one of clauses 11 to 14, wherein the plurality of data and instructions, when executed, cause the agent of the mobile device to:
   query the on-board service availability for an on-board public network connection from a cloud-computing environment.
16. The mobile device of any one of clauses 11 to 15, wherein the plurality of data and instructions, when executed, cause the agent of the mobile device to:
   bypass a network connection assistant prompt associated with the on-board public network based in part on no on-board service availability; and
   authenticate a network connection assistant associated with the on-board public network based in part on the on-board connection availability and the on-board service availability.
17. The mobile device of any one of clauses 11 to 16, wherein the plurality of data and instructions, when executed, cause the agent of the mobile device to:
   enable the notification regarding connecting to the on-board public network by displaying an availability notification on the mobile device that the on-board public network connection is available.
18. The mobile device of any one of clauses 11 to 17, wherein the plurality of data and instructions, when executed, cause the agent of the mobile device to:
   enable the notification regarding connecting to the on-board public network by displaying an unavailability notification on the mobile device that the on-board public network connection is not available.
19. The mobile device of any one of clauses 11 or 18, wherein the notification is a local mobile device notification.
20. The mobile device of any one of clauses 12, wherein the plurality of data and instructions, when executed, cause the agent of the mobile device to:
   switching from the off-board public network to an additional off-board public network connection, based in part on: an off-board connection availability and an off-board service availability, or an additional off-board connection availability and an additional off-board service availability,
   wherein the off-board public network and the additional off-board public network connection are at least one of a WWAN network and a WLAN network.
21. A machine-readable storage medium having instructions embodied thereon, the instructions when executed by one or more processors, cause the one or more processors to perform a process comprising:
   detecting, at an agent on a mobile device, an on-board connection availability for an on-board public network associated with a service set identifier (SSID) from an access point on-board a vehicle;
   identifying, at the agent on the mobile device, an on-board service availability for the on-board public network;
   enabling, at the mobile device, a notification regarding connecting to the on-board public network based in part on the on-board connection availability and the on-board service availability; and
   enabling, at the mobile device, a connection to the on-board public network.
22. The machine-readable storage medium of clause 21, further comprising:
   switching, at the mobile device, from an off-board public network connection to an on-board public network connection based in part on the on-board connection availability and the on-board service availability.
23. The machine-readable storage medium of clause 21, further comprising:
   switching, at the mobile device, from the on-board public network to an off-board public network based in part on termination of the on-board connection availability or the on-board service availability.
24. The machine-readable storage medium of any one of clauses 21 to 23, further comprising:
   determining, at the mobile device, the on-board service availability or the on-board connection availability based in part on one or more of: a wireless access point (WAP) geolocation, a WAP altitude, a WAP velocity, an on-board public network signal strength, a vehicle door status, vehicle boarding data, or vehicle check-in data.
25. The machine-readable storage medium of any one of clauses 21 to 24, further comprising:
   querying, at the mobile device, the on-board service availability for an on-board public network connection from a cloud-computing environment.
26. The machine-readable storage medium of any one of clauses 21 to 25, further comprising:
   bypassing, at the mobile device, a network connection assistant prompt associated with the on-board public network based in part on no on-board service availability; and
   authenticating, at the mobile device, a network connection assistant associated with the on-board public network based in part on the on-board connection availability and the on-board service availability.
27. The machine-readable storage medium of any one of clauses 21 to 26, further comprising:
   enabling, at the mobile device, the notification regarding connecting to the on-board public network by displaying an availability notification on the mobile device that the on-board public network is available.
28. The machine-readable storage medium of any one of clauses 21 to 27, further comprising:
   disabling, at the mobile device, the notification regarding connecting to the on-board public network by displaying an unavailability notification on the mobile device that the on-board public network is not available.
29. The machine-readable storage medium of any one of clauses 21 to 28, wherein the notification is a local mobile device notification.
30. The machine-readable storage medium of any one of clauses 22, further comprising:
   switching, at the mobile device, from the off-board public network connection to an additional off-board public network connection, based in part on: an off-board connection availability and an off-board service availability, or an additional off-board connection availability and an additional off-board service availability,
   wherein an off-board public network or an additional off-board public network is a WWAN network or a WLAN network.

## Claims

1. A method for wireless connectivity for a mobile device, comprising:
detecting (254), at an agent (520) on the mobile device (550), a connection availability for a wireless network associated with a service set identifier, SSID, from an access point;
detecting (254), at the agent on the mobile device, a service availability (526) for the wireless network;
bypassing (256), by the agent on the mobile device, a captive network assistant associated with connecting to and authenticating with the wireless network based in part on the connection availability and the service availability of the wireless network; and
enabling (258), by the agent on the mobile device, a user to connect to the wireless network using the access point via the mobile device.

2. The method of claim 1, wherein:
the wireless network is a first wireless network;
the mobile device is connected to a second wireless network before detecting the connection availability and the service availability for the first wireless network; and
the method further comprises switching, at the mobile device, from a second network connection on the second wireless network to an first network connection on the first wireless network based in part on the connection availability and the service availability

3. The method of claim 2, wherein:
the first wireless network is an on-board public network and the second wireless network is an off-board public network; and
the on-board public wireless network is accessible on-board a vehicle.

4. The method of claim 3, further comprising:
switching, at the mobile device, from the on-board public network to an off-board public network based in part on termination of the on-board connection availability or the on-board service availability.

5. The method of any one of claim 1 to 4, further comprising:
determining, at the mobile device, the service availability or the connection availability based in part on one or more of: a wireless access point (WAP) geolocation, a WAP altitude, a WAP velocity, a wireless network signal strength, a vehicle door status, vehicle boarding data, or vehicle check-in data.

6. The method of any one of claim 1 to 5, further comprising:
querying, at the mobile device, the service availability for the wireless network connection from a cloud-computing environment.

7. The method of any one of claims 1 to 6, wherein bypassing the network connection assistant comprises:
bypassing, at the mobile device, a network connection assistant prompt associated with the wireless network based in part on no service availability; and
authenticating, at the mobile device, the captive network assistant associated with the wireless network based in part on the on-board connection availability and the on-board service availability.

8. The method of any one of claims 1 to 7, further comprising:
enabling, at the mobile device, a notification regarding connecting to the wireless network by displaying, at the mobile device, an availability notification on the mobile device that the wireless network connection is available.

9. The method of claim 8, further comprising:
enabling, at the mobile device, the notification regarding connecting to the wireless network by displaying an unavailability notification on the mobile device that the wireless network connection is not available.

10. The method of claim 8, wherein the notification is a local mobile device notification.

11. The method of claims 3, further comprising:
switching, at the mobile device, from the off-board public network connection to an additional off-board public network connection, based in part on: an off-board connection availability and an off-board service availability, or an additional off-board connection availability and an additional off-board service availability,
wherein the off-board public network connection and the additional off-board public network connections are at least one of a WWAN network and a WLAN network.

12. A mobile device for wireless connectivity, comprising:
at least one processor (812); and
at least one memory device (820) including a data store (822) to store a plurality of data and instructions that, when executed, cause an agent (520) of the mobile device (550) to:
detect a connection availability for a wireless network associated with a service set identifier, SSID, from an access point;
detect a service availability (526) for the wireless network;
bypass a captive network assistant associated with connecting to and authenticating with the wireless network based in part on the connection availability and the service availability of the wireless network; and
enable a user to connect to the wireless network via the mobile device.

13. The mobile device of claim 12, wherein the plurality of data and instructions, when executed, cause the agent of the mobile device to:
switch from an off-board public network to the on-board public network based in part on the on-board connection availability and the on-board service availability; and
switch from the on-board public network to an off-board public network based in part on termination of the on-board connection availability or the on-board service availability.

14. A machine-readable storage medium having instructions embodied thereon, the instructions when executed by one or more processors (812), cause the one or more processors to perform a process as described in any of claims 1 to 11.

15. The machine-readable storage medium of claim 14, further comprising:
disabling, at the mobile device, the notification regarding connecting to the on-board public network by displaying an unavailability notification on the mobile device that the on-board public network is not available.
